# EUROPÄISCHE PATENTSCHRIFT

(11) **EP 0 995 019 B1**
(45) Veröffentlichungstag und Bekanntmachung des Hinweises auf die Patenterteilung: **11.09.2002**
(21) Anmeldenummer: 98940142.7
(22) Anmeldetag: 04.07.1998
(51) Int. Cl.: F02B 27/02

(54) **LUFTANSAUGVORRICHTUNG FÜR BRENNKRAFTMASCHINEN**
AIR SUCTION DEVICE FOR INTERNAL COMBUSTION ENGINE
DISPOSITIF D'ASPIRATION D'AIR POUR MOTEUR A COMBUSTION INTERNE

(30) Priorität: 09.07.1997 DE 19729217
(43) Veröffentlichungstag der Anmeldung: 26.04.2000
(73) Patentinhaber: FILTERWERK MANN & HUMMEL GMBH, 71631 Ludwigsburg (DE)
(72) Erfinder: FISCHER, Christian, D-70736 Fellbach (DE); LEIPELT, Rudolf, D-71672 Marbach (DE); WEBER, Olaf, D-71229 Leonberg (DE)
(74) Vertreter: Voth, Gerhard, Dipl.-Ing.
(86) Internationale Anmeldenummer: EP9804145
(87) Internationale Veröffentlichungsnummer: WO99002827

(56) Entgegenhaltungen:
- WO-A-96/37696
- DE-C- 4 003 492
- GB-A- 2 132 692
- US-A- 4 858 568

## Beschreibung

Die Erfindung betrifft eine Luftansaugvorrichtung für Brennkraftmaschinen nach dem Oberbegriff des Anspruchs 1.

Aus der DE 40 03 492 ist eine Luftansaugvorrichtung bekannt. Dort ist ein um seine Achse drehbarer Sammelbehälter vorgesehen. Zu jedem Zylinder der Brennkraftmaschine zweigt ein stufenlos längenveränderbares Teil ab. Dieses Teil ist eine Ansaugleitung aus in Längsrichtung flexiblem und durch Spiralfedern verstärktem Schlauch aus Kunststoff.

Ein Nachteil dieser Luftansaugvorrichtung besteht darin, daß der außerhalb des Sammelbehälters angeordnete Schlauch verschmutzt wird und außerdem die Gefahr besteht, daß durch mechanische Einwirkungen der Schlauch reißt oder undicht wird.

Ein weiterer Nachteil besteht darin, daß auf einem außen liegenden Schlauch der Atmosphärendruck lastet. Bei zunehmender Motordrehzahl und damit zunehmendem Unterdruck im Ansaugbereich wird der Schlauch damit zunehmend mechanisch belastet. Ohne die Armierung durch eine Spiralfeder müßten die Schlauchwände so steif sein, daß bei einem stufenlos längenveränderlichem Saugrohr die mögliche Längendehnbarkeit und damit der maximal mögliche Schaltweg zu stark begrenzt wird.

Gerade bei Ansaugsystemen für Brennkraftmaschinen ist es erforderlich, eine möglichst große Längenänderung zu ermöglichen, um die Ansaugleitung optimal an die entsprechende Motordrehzahl anzupassen. Im Stand der Technik kann die Anpassung lediglich um eine Drehung von ca. 270 ° erfolgen. Es ist ferner aus der EP 0 747 584 ein Ansaugsystem für eine Brennkraftmaschine bekannt, bei dem in einem Sammelbehälter ein schwenkbares Saugrohrteil angeordnet ist. Durch Schwenken dieses Saugrohrteils sind zwei vordefinierte Saugrohrlängen einstellbar. Eine variable Anpassung der Saugrohrlänge ist nicht möglich.

Aus der GB-A 2 132 692 ist ein Luftsammelbehälter bekannt, in dem flexible Rohrstücke in Form von unarmierten Schlauchstücken fester Länge geradlinig oder bogenförmig angeordnet sind. Diese Schläuche führen zu den Einlässen einzelner Zylinder. Ein Nachteil dieser Einrichtung besteht darin, dass bei sehr großen Schlauchlängen der vorhandene Bauraum für die Aufnahme des Schlauches nicht ausreichend ist.

Die DE 38 25 000 beschreibt eine Ansaugleitung von Brennkraftmaschinen mit stufenlos veränderbarer wirksamer Länge, wobei ein Ansaugkanal vorgesehen ist, in welchem ein Schieber gelagert ist. Je nach Stellung des Schiebers wird ein Kanal geöffnet oder geschlossen bzw. die Kanallänge verstellt. Ein Nachteil dieses Systems besteht darin, dass der Aufbau hohe Reibungsverluste aufweist und die Anordnung des Schiebers im Ansaugkanal einer Brennkraftmaschine nur mit einem unverhältnismäßig hohen Aufwand technisch realisierbar ist.

Der Erfindung liegt daher die Aufgabe zugrunde, eine Luftansaugvorrichtung zu schaffen, die die genannten Nachteile vermeidet, kostengünstig herstellbar ist und zuverlässig funktioniert. Diese Aufgabe wird durch die Merkmale des Hauptanspruchs gelöst.

Der wesentliche Vorteile der Erfindung liegt darin, dass für die Ansaugleitungen zwar auch ein flexibler Schlauch verwendet wird, dieser jedoch geschützt innerhalb des Sammelbehälters angeordnet ist.

Gemäß einer Ausgestaltung der Erfindung können die Länge und der Durchmesser des Schlauches in einfacher Weise an die jeweilige Brennkraftmaschine angepasst werden. Beispielsweise sind bei einer Brennkraftmaschine mit geringerem Hubraum geringere Schlauchdurchmesser erforderlich, bei einer Brennkraftmaschine mit großem Hubraum sind größere Ansaugdurchmesser und evtl. auch größere Schlauchlängen erforderlich. Die Luftansaugvorrichtung kann daher optimal an den jeweiligen Motor angepasst werden.

Gemäß einer weiteren Ausgestaltung der Erfindung kann die Länge des Schlauches auch beliebig stufenlos variiert werden. Hierzu liegt der Schlauchmund beispielsweise auf einem Stützkörper auf, der drehbar gelagert ist. Auch der Schlauch kann sich an diesem Stützkörper anlegen. Selbstverständlich besteht auch die Möglichkeit, den Schlauch geradlinig zu verlängern oder zu verkürzen. In diesem Fall würde der Stützkörper eine Längsbewegung ausführen.

Es ist weiterhin von Vorteil, dass der Schlauch schraubenförmig auf einem Stützkörper gelagert ist. Damit können sehr große Längen der Ansaugleitung realisiert werden.

Diese und weitere Merkmale von bevorzugten Weiterbildungen der Erfindung gehen außer aus den Ansprüchen auch aus der Beschreibung und den Zeichnungen hervor.

Die Erfindung wird nachfolgend anhand eines Ausführungsbeispiels näher erläutert. Es zeigen:
- Figur 1: eine Luftansaugvorrichtung in einer schematischen Schnittdarstellung,
- Figur 2: die Variante einer Luftansaugvorrichtung,
- Figur 3a: eine Draufsicht auf eine Variante einer Luftansaugvorrichtung,
- Figur 3b: eine Draufsicht auf die Vorrichtung gemäß Figur 2,
- Figur 4: eine Detaildarstellung.

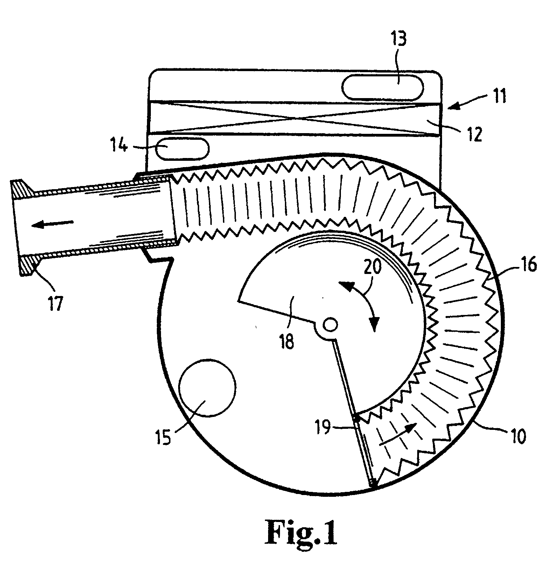

Die Luftansaugvorrichtung gemäß Figur 1 besteht aus einem Gehäuse 10. Auf diesem ist ein Luftfilter 11 angeordnet mit einem Filterelement 12, einem Rohlufteinlaß 13 und einem Reinluftauslaß 14. Die Reinluft gelangt, ausgehend von Reinluftauslaß 14 unter Zwischenschaltung einer hier nicht dargestellten Drosselklappe an den Reinlufteinlaß 15 der Luftansaugvorrichtung und strömt über einen flexiblen Schlauch 16 zu dem Anschlußflansch 17 und von dort in die nicht dargestellte Brennkraftmaschine. Der Schlauch 16 liegt auf einem Stützkörper 18 auf und ist an dem Schlauchmund 19 mit dem Stützkörper 18 verbunden. Eine Drehbewegung des Stützkörpers 18 gemäß Pfeil 20 führt zu einer Längenveränderung, so daß sich die Saugrohrlänge an die Betriebsbedingungen des Motors anpassen läßt.

Die Luftansaugvorrichtung besteht zweckmäßigerweise aus einem Kunststoffgehäuse. Selbstverständlich kann dies auch aus einem Metallgehäuse hergestellt werden. Da der Stützkörper 18 keine Abdichtfunktionen aufweisen muß, ist lediglich eine geringe Reibung beim Verstellen des Stützkörpers 18 zu überwinden. Der Schlauch 16 liegt lose auf dem Stützkörper 18 auf. Eine Wandberührung des Schlauches 16 mit der Wand des Gehäuses 10 erfolgt nicht, so daß auch hier mit keinen zusätzlichen Reibungskräften zu rechnen ist.

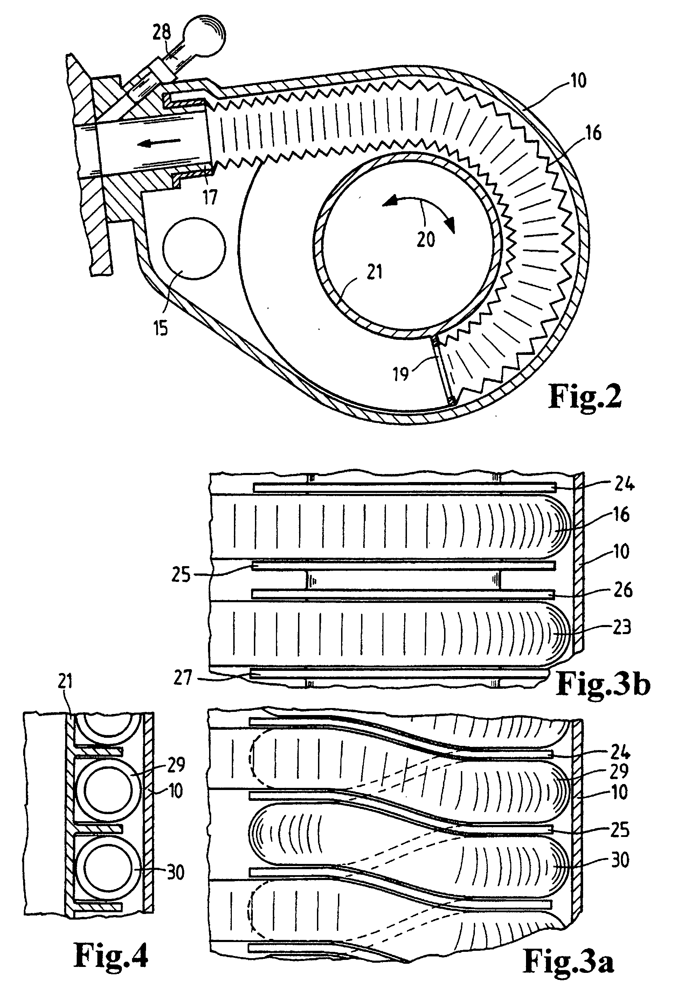

Figur 2 zeigt eine Variante. Gleiche Teile sind mit gleichen Bezugszeichen versehen. Der flexible Schlauch 16 ist auf einer allseitig geschlossenen Trägertrömmel 21 angeordnet und ebenfalls im Bereich des Schlauchmundes 19 an dieser befestigt. Der Hohlraum in der Trägertrommel kann für beliebige zusätzliche Motor-Peripheriebauteile genutzt werden. Der Schlauch ist zwischen dem Anschlußflansch 17 und der Auflage auf der Trägertrommel allseitig eng geführt, so daß er beim Zurückdrehen nicht ausknicken und sich in der Führung nicht verklemmen kann.

Wie bereits in Figur 1 erwähnt, wird die Luftansaugvorrichtung über einen Anschlußflansch an eine nicht dargestellte Brennkraftmaschine angekoppelt. Die Luftansaugvorrichtung trägt im Bereich des Anschlußflansches die Einspritzdüsen für den Kraftstoff. Außerdem können an der Luftansaugvorrichtung noch weitere Elemente, wie z. B. Luftmengenmesser, Kraftstoffverteiler und ähnliches angeordnet oder integriert sein.

Die Befestigung des Schlauches 16 an dem Anschlußflansch 17 erfolgt beispielsweise über eine Klebverbindung. Selbstverständlich kann der Schlauch auch auf den Anschlußflansch aufgeschrumpft oder mit diesem verschweißt sein.

Figur 3a zeigt die Führung eines Schlauches auf einer Trägertrommel 21, welche in Figur 4 zu sehen ist. Die wendelförmige Anordnung hat den Vorteil, daß die Trägertrommel zwei oder mehr Umdrehungen ausführen kann und damit sehr große Längenänderungen möglich sind. Auf der Trägertrommel ist ein Schlauch mit zwei Windungen 29, 30 angeordnet. Die obere Windung 29 führt zu dem Anschlußflansch der Brennkraftmaschine. Es ist ersichtlich, daß durch diese Anordnung die Möglichkeit besteht, eine Längenänderung des Ansaugtraktes um 2 Schlauchwindungen vornehmen zu können. Da der Schlauch durch Stege 24, 25 in seiner Lage fixiert ist, ist eine Verformung des Schlauches durch Unterdruck nicht zu befürchten.

Figur 3b zeigt die Führung des Schlauches 16 auf einer Trägertrommel, bei welcher ebenfalls Stege 24 bis 27 vorgesehen sind. Bei dieser Anordnung ist maximal eine Umdrehung der Trägertrommel 21 möglich. Die gesamte Anordnung kann modulartig aufgebaut sein, d. h. die Luftansaugvorrichtung besteht aus zwei oder mehr Modulen, wobei ein Modul das Filtersystem mit dem Filterelement 12 bildet und das weitere Modul das längenvariable Ansaugsystem darstellt. Der modulartige Aufbau hat den Vorteil, daß eine Variation der einzelnen Elemente zur Anpassung an die Brennkraftmaschine ohne großen Aufwand möglich ist.

Figur 4 zeigt die Lagepositionierung des Schlauches 16 bzw. des benachbarten Schlauches 22 auf der Trägertrommel 21. Je nach Anzahl der Zylinder der Brennkraftmaschine befindet sich die entsprechende Anzahl variabler Schläuche auf dem Stützkörper.

## Patentansprüche

1. Luflansaugvorrichtung für Brennkraftmaschinen mit wenigstens einem Sammelbehälter und getrennt zu den einzelnen Zylindern der Brennkraftmaschine abzweigende Ansaugleitungen, wobei die Ansaugleitungen sich bis in den Sammelbehälter (10) erstrecken und wenigstens teilweise aus einem flexiblen Schlauch (16), insbesondere Kunststoffschlauch gebildet sind, **dadurch gekennzeichnet, daß** der Schlauch (16) schraubenförmig auf einem Stützkörper (18) gelagert ist.

2. Luftansaugvorrichtung nach Anspruch 1, wobei der Schlauch aus dünnwandigem Kunststoffwellrohr ohne Armierung besteht, so daß sich der Schlauch aus der Ausgangslänge etwa gleich weit zusammendrücken wie auseinanderziehen läßt.

3. Luftansaugvorrichtung nach Anspruch 1, wobei der Schlauch (16) eine feste Länge aufweist, jedoch baukastenartig auswechselbar ist.

4. Luftansaugvorrichtung nach Anspruch 1, wobei der Schlauch (16) in seiner Länge veränderbar ist, und zwar sowohl geradlinig als auch bogen- oder kreisförmig.

5. Luftansaugvorrichtung nach Anspruch 1, **dadurch gekennzeichnet, daß** der Stützkörper den Schlauch radial abstützt und radial nach außen gerichtete Flanschsegmente oder einen radial nach außen gerichtete Flansch aufweist und den Schlauch in axialer Richtung abstützt.

6. Luftansaugvorrichtung nach Anspruch 3, **dadurch gekennzeichnet, daß** der Schlauch (16) auf einem Stützkörper (18) befestigt ist, wobei der Stützkörper (18) drehbar oder spindelförmig bewegbar gelagert ist.

## Claims

1. Air intake apparatus for internal combustion engines, having at least one collecting reservoir and intake pipes which branch-off separately towards the individual cylinders of the internal combustion chamber, the intake pipes extending to the collecting reservoir (10) and being formed at least partly from a flexible hose (16), more especially a plastics material hose, **characterised in that** the hose (16) is helically mounted on a supporting body (18).

2. Air intake apparatus according to claim 1, wherein the hose comprises a thin-walled plastics material corrugated tube without any reinforcement, so that the hose can be compressed and spread-out from the initial length roughly to the same extent.

3. Air intake apparatus according to claim 1, **characterised in that** the hose (16) has a fixed length, but it is interchangeable in a modular manner.

4. Air intake apparatus according to claim 1, wherein the hose (16) is variable in respect of its length, that is to say both rectilinear and arcuate or circular.

5. Air intake apparatus according to claim 1, **characterised in that** the supporting body radially supports the hose and has radially outwardly orientated flange segments or a radially outwardly orientated flange and supports the hose in the axial direction.

6. Air intake apparatus according to claim 3, **characterised in that** the hose (16) is secured on a supporting body (18), the supporting body (18) being mounted in a rotatable manner or in a spindle-like displaceable manner.

## Revendications

1. Dispositif d'admission d'air d'un moteur à combustion interne comportant au moins un collecteur et des conduites d'admission séparées, partant vers les différents cylindres du moteur, les conduites d'admission arrivant jusque dans le collecteur (10) en étant réalisées au moins en partie par un tuyau souple (16), notamment un tuyau en matière plastique,
**caractérisé en ce que**
le tuyau (16) est monté suivant un tracé hélicoïdal sur un support (18).

2. Dispositif selon la revendication 1,
**caractérisé en ce que**
le tuyau est un tuyau en matière plastique à ondulations, à paroi mince, sans armature, permettant au tuyau de se comprimer ou de s'allonger sensiblement de la même manière à partir de sa longueur initiale.

3. Dispositif selon la revendication 1,
**caractérisé en ce que**
le tuyau (16) a une longueur fixe mais peut être échangé à la manière d'un jeu de construction.

4. Dispositif selon la revendication 1,
**caractérisé en ce que**
le tuyau (16) a une longueur variable et peut être à la fois rectiligne et cintré ou en arc de cercle.

5. Dispositif selon la revendication 1,
**caractérisé en ce que**
le support soutient radialement le tuyau et comporte des éléments de bride dirigés radialement vers l'extérieur ou un élément de bride dirigé radialement vers l'extérieur et soutenant le tuyau dans la direction axiale.

6. Dispositif selon la revendication 3,
**caractérisé en ce que**
le tuyau (16) est fixé sur un support (18) qui est monté mobile en rotation ou suivant une hélice.
